(19) Europäisches Patentamt
European Patent Office
Office européen des brevets

(11) **EP 3 285 229 B1**

(12) **EUROPEAN PATENT SPECIFICATION**

(45) Date of publication and mention
of the grant of the patent:
**29.01.2020 Bulletin 2020/05**

(21) Application number: **17186701.3**

(22) Date of filing: **02.11.2011**

(51) Int Cl.:
*G06T 5/00* (2006.01)      *H04N 5/232* (2006.01)
*G02B 7/34* (2006.01)      *G02B 27/00* (2006.01)
*G06K 9/52* (2006.01)      *G06T 7/60* (2017.01)
*H04N 5/225* (2006.01)      *G06K 9/62* (2006.01)

(54) **IMAGE PROCESSING APPARATUS AND IMAGE PROCESSING METHOD**

BILDVERARBEITUNGSVORRICHTUNG UND BILDVERARBEITUNGSVERFAHREN

APPARÉIL ET PROCÉDÉ DE TRAITEMENT D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2010 JP 2010247050**

(43) Date of publication of application:
**21.02.2018 Bulletin 2018/08**

(62) Document number(s) of the earlier application(s) in
accordance with Art. 76 EPC:
**11187428.5 / 2 450 848**

(73) Proprietor: **CANON KABUSHIKI KAISHA
Ohta-ku
Tokyo 146-8501 (JP)**

(72) Inventor: **HAMANO, Hideyuki
Ohta-ku, Tokyo (JP)**

(74) Representative: **Williamson, Brian
Canon Europe Limited
European Patent Department
3 The Square
Stockley Park
Uxbridge, Middlesex UB11 1ET (GB)**

(56) References cited:
**EP-A2- 1 885 119      US-A1- 2007 052 835
US-A1- 2009 115 882      US-A1- 2010 073 518**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to an image processing apparatus and an image processing method that can perform blur restoration based on an object distance in a captured image.

Description of the Related Art

As discussed in Japanese Patent Application Laid-Open No. 2000-156823, there is a conventional imaging apparatus that includes focus detection pixels discretely located between pixel groups of an image sensor that can calculate an object distance based on a signal obtained from each focus detection pixel. An object distance distribution in a captured image can be acquired when the configuration discussed in Japanese Patent Application Laid-Open No. 2000-156823 is employed.

Further, there is a conventional method for generating a restored image that has been restored from a blurred image using, for example, a Wiener filter, a general inverse filter, or a projection filter. The blur restoration technique employing the above-described method is discussed, for example, in Japanese Patent Application Laid-Open No. 2000-20691. When the technique discussed in Japanese Patent Application Laid-Open No. 2000-20691 is used, it becomes feasible to obtain a deterioration function through a physical analysis based on shooting conditions or an estimation based on an output of a measurement apparatus provided in an imaging apparatus. Further, it becomes feasible to restore an image from a blurred image according to an image restoring algorithm, which is generally referred to as "deconvolution."

Usually, a focus state in a shooting operation of the camera substantially determines a target object distance to be focused. Therefore, the focused object distance cannot be changed after completing the shooting operation. However, if an object distance distribution in a captured image can be acquired using the technique discussed in Japanese Patent Application Laid-Open No. 2000-156823 and the blur restoration is performed using the blur restoration technique discussed in Japanese Patent Application Laid-Open No. 2000-20691, it is feasible to change a target object distance to be focused after completing the shooting operation. However, if the technique discussed in Japanese Patent Application Laid-Open No. 2000-156823 and the technique discussed in Japanese Patent Application Laid-Open No. 2000-20691 are employed for an imaging apparatus, it takes a long time when a photographer performs blur restoration and focus position adjustment of an image to be captured. As a result, employing such a combination of the conventional techniques is not useful.

US2010/0073518 discloses blur correction according to distance to an object.

SUMMARY OF THE INVENTION

According to a first aspect of the present invention, there is provided an image processing apparatus as specified in claims 1 to 9.

According to a second aspect of the present invention, there is provided a method as specified in claims 10.

Further features and aspects of the present invention will become apparent from the following detailed description of embodiments with reference to the attached drawings.

BRIEF DESCRIPTION OF THE DRAWINGS

The accompanying drawings illustrate embodiments, features, and aspects of the invention and, together with the description, serve to explain the principles of the invention.

Fig. 1 illustrates an example configuration of an image processing apparatus according to a first embodiment of the present invention.
Figs. 2A and 2B illustrate image capturing pixels of an image sensor according to the first embodiment of the present invention.
Figs. 3A and 3B illustrate focus detection pixels of the image sensor according to the first embodiment of the present invention.
Figs. 4A and 4B illustrate another focus detection pixels of the image sensor according to the first embodiment of the present invention.
Fig. 5 schematically illustrates a pupil division state of the image sensor according to the first embodiment of the present invention.

Fig. 6 illustrates object distance information.

Fig. 7 illustrates a relationship between object distances and a blur restorable distance.

Figs. 8A to 8C illustrate example states of blur restoration performed on a captured image.

Fig. 9 (including Figs. 9A and 9B) is a flowchart illustrating a main routine that can be performed by the image processing apparatus according to the first embodiment of the present invention.

Fig. 10 is a flowchart illustrating an object distance map generation sub routine according to the first embodiment of the present invention.

Fig. 11 is a flowchart illustrating an image capturing sub routine according to the first embodiment of the present invention.

Fig. 12 is a flowchart illustrating a captured image confirmation sub routine according to the first embodiment of the present invention.

Fig. 13 is a flowchart illustrating a blur restoration sub routine according to the first embodiment of the present invention.

Fig. 14 is a flowchart illustrating a blur function generation sub routine according to the first embodiment of the present invention.

Fig. 15 is a flowchart illustrating a blur restoration distance fine correction sub routine according to the first embodiment of the present invention.

Fig. 16 illustrates a relationship between object distances and a blur restoration distance at which fine correction of the focus position can be performed.

Fig. 17 is a flowchart illustrating a blur restoration distance fine correction sub routine according to a second embodiment of the present invention.

DESCRIPTION OF THE EMBODIMENTS

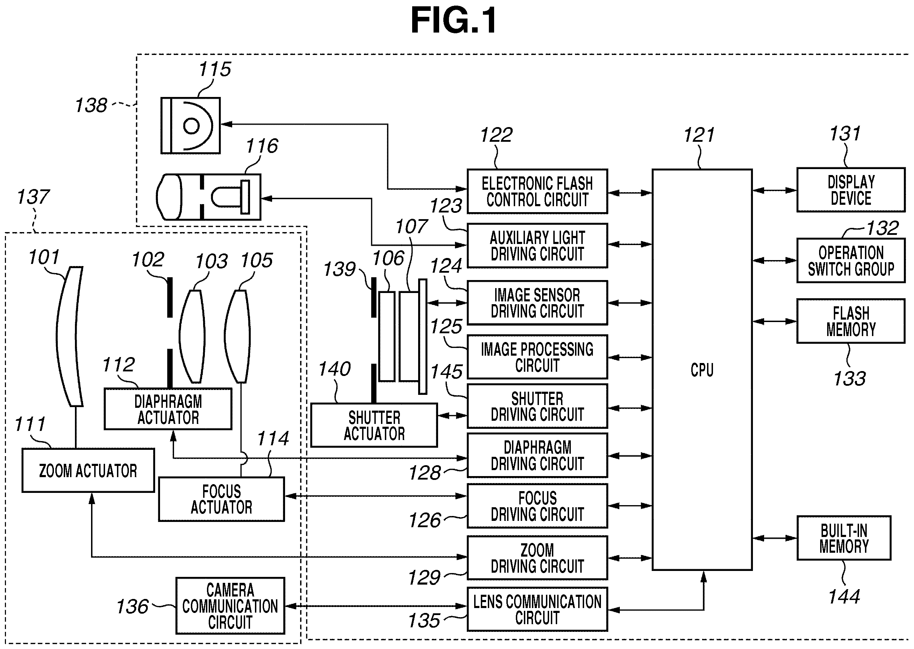

An image processing apparatus according to a first embodiment of the present invention is described in detail below with reference to Fig. 1 to Fig. 15.

Fig. 1 illustrates an example configuration of the image processing apparatus according to the first embodiment. The image processing apparatus is, for example, usable as an imaging apparatus. The image processing apparatus illustrated in Fig. 1 is an electronic camera that includes a main camera body 138 equipped with an image sensor and a photographic lens 137 that is independently configured and is attachable to and detachable from the main camera body 138. In other words, the photographic lens 137 is an interchangeable lens coupled with the main camera body 138.

First, the configuration of the photographic lens 137 is described in detail below. The photographic lens 137 includes a first lens group 101, a diaphragm 102, a second lens group 103, and a third lens group 105. The first lens group 101 is located at the front end of an imaging optical system (image forming optical system) and movable back and forth in a direction of the optical axis. The diaphragm 102 has an aperture whose diameter is variable to adjust the quantity of light in a shooting operation. The second lens group 103 is integrally moved with the diaphragm 102 back and forth in the optical axis direction. Further, the first lens group 101 and the second lens group 103 can perform the above-described back and forth movements cooperatively to realize a zoom function.

The third lens group 105 (hereinafter, referred to as "focus lens") can move back and forth in the optical axis direction to perform a focus adjustment. The photographic lens 137 further includes a zoom actuator 111, a diaphragm actuator 112, and a focus actuator 114, and a camera communication circuit 136. The zoom actuator 111 rotates a cam cylinder (not illustrated) to drive each of the first lens group 101 and the second lens group 103 to move back and forth in the optical axis direction, so that a zoom operation can be performed. The diaphragm actuator 112 controls the aperture diameter of the diaphragm 102 to adjust the quantity of light to be used in a shooting operation. The focus actuator 114 drives the focus lens 105 to move back and forth in the optical axis direction to perform a focus adjustment.

The photographic lens 137 further includes a camera communication circuit 136 that can transmit lens related information to the main camera body 138 or can receive information relating to the main camera body 138. The lens related information includes a zoom state, a diaphragm state, a focus state, lens frame information, lens focus driving accuracy information, and the like. The camera communication circuit 136 transmits the above-described information pieces to a lens communication circuit 135 provided in the main camera body 138. The above-described lens related information pieces can be partly stored in the main camera body 138. In this case, it can reduce the amount of communications performed between the photographic lens 137 and the main camera body 138, and thus, information processing can be performed speedily.

Next, the configuration of the main camera body 138 is described in detail below. The main camera body 138 includes an optical low-pass filter 106, an image sensor 107, an electronic flash 115, and an automatic focusing (AF) auxiliary light apparatus 116. The optical low-pass filter 106 is an optical element that can reduce false color or moire of a captured image. The image sensor 107 includes a Complementary Metal Oxide Semiconductor (C-MOS) sensor and a peripheral circuit. For example, the image sensor 107 is a two-dimensional single panel color sensor that includes light-receiving pixels arranged in a matrix pattern of m pixels in the horizontal direction and n pixels in the vertical direction and on-chip primary color mosaic filters constituting a Bayer array on the light-receiving pixels.

The electronic flash 115 is, for example, a flash illuminating apparatus that uses a xenon lamp to illuminate an object in a shooting operation. Alternatively, the electronic flash 115 can be another illuminating apparatus including light emitting diodes (LEDs) that can emit light continuously. The AF auxiliary light apparatus 116 can project an image of a mask having a predetermined aperture pattern via a light projection lens toward the field of view, to improve focus detection capability when an object to be captured is dark or when the contrast of the image is low.

The main camera body 138 further includes a central processing unit (CPU) 121, an electronic flash control circuit 122, an auxiliary light driving circuit 123, an image sensor driving circuit 124, and an image processing circuit 125. The CPU 121 performs various controls in the main camera body 138. The CPU 121 includes a calculation unit, a read only memory (ROM), a random access memory (RAM), an analog-to-digital (A/D) converter, a digital-to-analog (D/A) converter, a communication interface circuit, and the like. Further, the CPU 121 drives various circuits provided in the main camera body 138 based on predetermined programs stored in the ROM to perform sequential operations including auto-focusing, shooting, image processing, and recording.

The electronic flash control circuit 122 controls turning-on of the electronic flash 115 in synchronization with a shooting operation. The auxiliary light driving circuit 123 performs turning-on control for the AF auxiliary light apparatus 116 in synchronization with a focus detection operation. The image sensor driving circuit 124 controls an imaging operation of the image sensor 107. The image sensor driving circuit 124 converts an acquired image signal (i.e., an analog signal) into a digital signal and transmits the converted signal to the CPU 121. The image processing circuit 125 performs gamma transformation, color interpolation, and Joint Photographic Experts Group (JPEG) compression processing on an image acquired by the image sensor 107.

The main camera body 138 further includes a focus driving circuit 126, a diaphragm driving circuit 128, and a zoom driving circuit 129. The focus driving circuit 126 controls the driving of the focus actuator 114 based on a focus detection result to perform a focus adjustment in such a way as to cause the focus lens 105 to move back and forth in the optical axis direction. The diaphragm driving circuit 128 controls the driving of the diaphragm actuator 112 to change the aperture of the diaphragm 102. The zoom driving circuit 129 drives the zoom actuator 111 in response to a zoom operation of a photographer.

The lens communication circuit 135 can perform communications with the camera communication circuit 136 in the photographic lens 137. The main camera body 138 further includes a shutter unit 139, a shutter actuator 140, a shutter driving circuit 145, a display device 131, an operation switch group 132, and a built-in memory 144. The shutter unit 139 controls an exposure time during a still image shooting operation. The shutter actuator 140 moves the shutter unit 139. The shutter driving circuit 145 drives the shutter actuator 140.

The display device 131 is, for example, a liquid crystal display (LCD) that can display information relating to a shooting mode of the camera, a pre-shooting preview image, a post-shooting image for confirmation, and an in-focus state display image in the focus detection operation.

The operation switch group 132 includes a power switch, a release switch (i.e., a shooting preparation switch and a shooting start switch), a zoom operation switch, and a shooting mode selection switch. A flash memory 133, which is attachable to and detachable from the main camera body 138, stores captured images . The built-in memory 144 stores various data pieces that the CPU 121 requires to perform calculations.

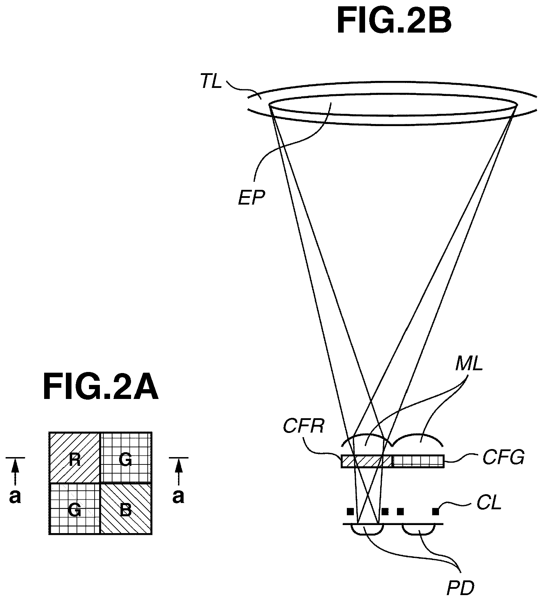

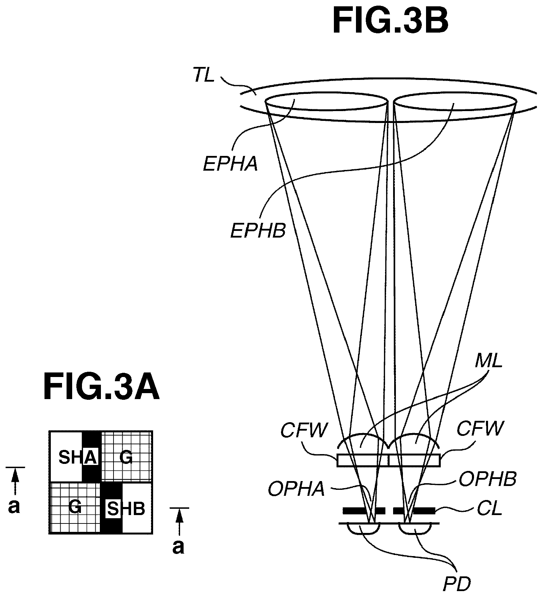

Figs. 2A and 2B illustrate an example structure of image capturing pixels. Figs. 3A and 3B illustrate an example structure of focus detection pixels. In the first embodiment, four pixels are arranged in a Bayer array of four pixels with two lines × two columns. More specifically, two pixels having green (G) spectral sensitivity are disposed along a diagonal direction. A pixel having red (R) spectral sensitivity and a pixel having blue (B) spectral sensitivity are disposed along another diagonal direction. Further, focus detection pixels are discretely disposed between the Bayer arrays according to a predetermined regularity. As discussed in Japanese Patent Application Laid-Open No. 2000-156823 (patent literature 1), the technique for disposing focus detection pixels discretely between image capturing pixels is conventionally known and therefore the description thereof is omitted.

Figs. 2A and 2B illustrate the layout and the structure of the image capturing pixels. Fig. 2A is a plan view illustrating four image capturing pixels in a matrix pattern of two lines × two columns. As is conventionally well known, the Bayer array includes two G pixels disposed along a diagonal direction and R and B pixels disposed along another diagonal direction to constitute a matrix structure of two lines × two columns, which is repetitively disposed.

Fig. 2B is a cross-sectional view including two image capturing pixels taken along a line a-a illustrated in Fig. 2A. An on-chip microlens ML is disposed on the forefront surface of each pixel. A red (R) color filter CFR and a green (G) color filter CFG are also included. A photoelectric conversion element (PD) of the C-MOS sensor is schematically illustrated in Fig. 2B. The C-MOS sensor includes a wiring layer CL that forms signal lines for transmitting various signals in the C-MOS sensor. Fig. 2B further includes an imaging optical system TL and an exit pupil EP.

In the present embodiment, the on-chip microlens ML and the photoelectric conversion element PD are configured to receive a light flux passed through the imaging optical system TL effectively as much as possible. In other words, the microlens ML brings the exit pupil EP of the imaging optical system TL and the photoelectric conversion element PD into a conjugate relationship. Further, the photoelectric conversion element PD is designed to have a large effective area.

Fig. 2B illustrates only the incident light flux of a red (R) pixel, although each green (G) pixel and a blue (B) pixel has a similar configuration. To this end, the exit pupil EP corresponding to each of the RGB image capturing pixels has a large diameter to receive the light flux from an object effectively in such a way as to improve the signal-to-noise (S/N) ratio of an image signal.

Figs. 3A and 3B illustrate the layout and the structure of the focus detection pixels, which is used to perform pupil division along the horizontal direction (lateral direction) of an image frame. Fig. 3A is a plan view illustrating a matrix of pixels with two lines × two columns, which includes the focus detection pixels.

When the image signal is obtained, the G pixel serves as a main component of luminance information. In general, as image recognition characteristics of human, people are sensitive to the luminance information. Therefore, if a G pixel is defective, deterioration in image quality can be easily recognized. On the other hand, the color information can be obtained from an R or B pixel. However, people are insensitive to the color information. Therefore, when a color information acquiring pixel is defective, it is difficult to recognize the deterioration in image quality.

Hence, in the first embodiment, of the above-described four pixels in a matrix with two lines × two columns, the G pixels remain as the image capturing pixels and the R and B pixels are used as focus detection pixels SHA and SHB as illustrated in Fig. 3A.

Fig. 3B is a cross-sectional view including two focus detection pixels taken along a line a-a illustrated in Fig. 3A. The microlens ML and the photoelectric conversion element PD have a structure similar to that of the image capturing pixel illustrated in Fig. 2B. In the first embodiment, the signal obtainable from the focus detection pixel is not used for generation of an image. Therefore, instead of a color separation color filter, a transparent film CFW (White) is disposed on each focus detection pixel. Further, to perform the pupil division with the image sensor 107, an aperture portion of the wiring layer CL is offset in the horizontal direction relative to the central line of the microlens ML.

More specifically, an aperture portion OPHA of the focus detection pixel SHA is positioned on the right side, so that the light flux having passed through a left exit pupil EPHA of the photographic lens TL is received. Similarly, an aperture portion OPHB of the focus detection pixel SHB is positioned on the left side, so that the light flux having passed through a right exit pupil EPHB of the photographic lens TL is received. Thus, the focus detection pixels SHA, which constitute one pixel group, are disposed regularly in the horizontal direction, and an object image acquired from the pixel group of the pixels SHA is referred to as an "A image."

Similarly, the focus detection pixels SHB, which constitute the other pixel group, are regularly disposed in the horizontal direction, and an object image acquired from the pixel group of the pixels SHB is referred to as "B image." If a relative position between the A image and the B image is detected, a focus deviation amount (or a defocus amount) of the photographic lens 137 can be detected.

In the present embodiment, the microlens ML can be function as a lens element that can generate a pair of optical images, i.e., the A image obtainable from the light flux having passed through the left exit pupil EPHA of the photographic lens TL and the B image obtainable from the light flux having passed through the right exit pupil EPHB of the photographic lens TL.

The above-described focus detection pixels SHA and SHB can perform focus detection when the object is a vertically extending line that has a luminance distribution in the horizontal direction of the image frame. However, the focus detection pixels SHA and SHB cannot perform focus detection if the object is a horizontally extending line that has a luminance distribution in the vertical direction of the image frame. Hence, the image processing apparatus according to the first embodiment includes pixels that can perform the pupil division in the vertical direction (longitudinal direction) of the photographic lens to detect the focus detection for the latter object.

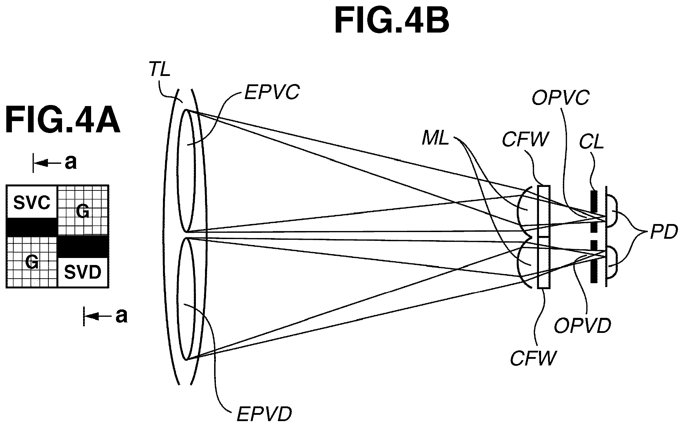

Figs. 4A and 4B illustrate the layout and the structure of focus detection pixels, which is employable to perform pupil division along the vertical direction of the image frame. Fig. 4A is a plan view illustrating a matrix of pixels with two lines × two columns, which includes the focus detection pixels. Similar to the example illustrated in Fig. 3A, the G pixels remain as the image capturing pixels and the R and B pixels are used as focus detection pixels SVC and SVD as illustrated in Fig. 4A. Fig. 4B is a cross-sectional view including two focus detection pixels taken along a line a-a illustrated in Fig. 4A. The pixel arrangement illustrated in Fig. 4B is characterized in that the pupil separation direction is set in the vertical direction, in contrast to that in Fig. 3B characterized in that the pupil separation is performed in the horizontal direction. Other than that, the pixel structure is the same.

More specifically, an aperture portion OPVC of the focus detection pixel SVC is positioned on the lower side, so that the light flux having passed through an upper exit pupil EPVC of the photographic lens TL is received. Similarly, an aperture portion OPVD of the focus detection pixel SVD is positioned on the upper side, so that the light flux having passed through a lower exit pupil EPVD of the photographic lens TL is received. Thus, the focus detection pixels SVC, which constitute one pixel group, are disposed regularly in the vertical direction, and an object image acquired from the pixel group of the pixels SVC is referred to as "C image."

Similarly, the focus detection pixels SVD, which constitute the other pixel group, are disposed regularly in the vertical direction, and. an object image acquired from the pixel group of the pixels SVD is referred to as "D image." If a relative position between the C image and the D image is detected, a focus deviation amount (or a defocus amount) of an object image that has a luminance distribution in the vertical direction of the image frame can be detected.

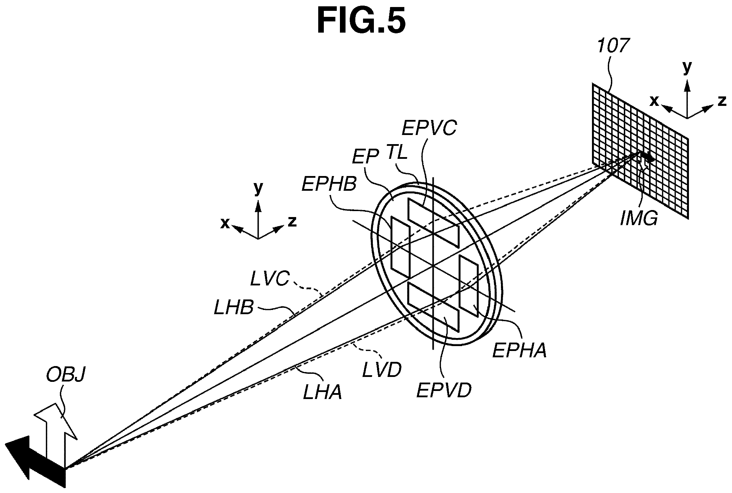

Fig. 5 schematically illustrates a pupil division state of the image sensor 107 according to the first embodiment, in which an object image IMG of an object OBJ is formed on the image sensor 107 via the photographic lens TL. As described above with reference to Figs. 2A and 2B, the image capturing pixels receives a light flux having passed through the entire region of the exit pupil EP of the photographic lens. On the other hand, the focus detection pixels have the capability of dividing the pupil as described above with reference to Figs. 3A and 3B and Figs. 4A and 4B.

More specifically, as illustrated in Figs. 3A and 3B, the focus detection pixel SHA receives a light flux having passed through the left pupil, when the rear end of the lens is seen from an imaging plane. In other words, in Fig. 5, the focus detection pixel SHA receives a light flux having passed through the pupil EPHA. Similarly, the focus detection pixels SHB, SVC, and SVD receive light fluxes having passed through corresponding pupils EPHB, EPVC, and EPVD, respectively. Further, when the focus detection pixels are located in the entire region of the image sensor 107, the focus detection can be effectively performed throughout the imaging region.

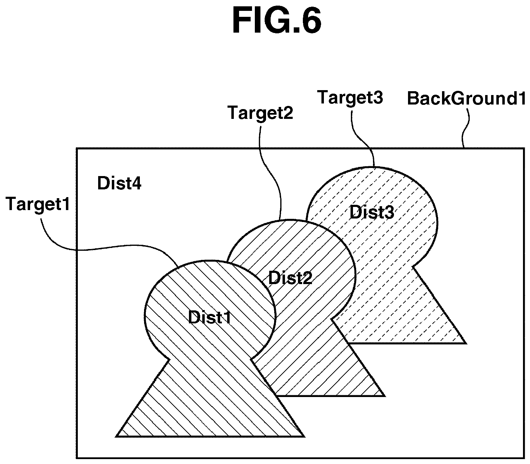

Fig. 6 illustrates distance information obtained by the CPU 121 using its distance information acquisition function. The image sensor 107 according to the first embodiment includes a plurality of focus detection pixels SHA, SHB, SVC, and SVD, which are distributed in the entire region, as described above with reference to Figs. 3A and 3B and Figs. 4A and 4B. Therefore, distance information of an object can be acquired at an arbitrary position in the image frame. When grouping is performed to join a plurality of object areas that have similar distance in the object distance distribution, the contour of each object included in the image frame can be extracted.

In Fig. 6, Target1, Target2, and Target3 indicate extracted object areas, respectively. BackGround1 indicates a background area. Dist1, Dist2, Dist3, and Dist4 indicate object distances. The object distance Dist1 has a value representing the object distance of the object area Target1. The object distance Dist2 has a value representing the object distance of the object area Target2. The object distance Dist3 has a value representing the object distance of the object area Target3. Further, the object distance Dist4 has a value representing the object distance of the background area BackGround1.

The object distance Dist1 is shortest. The object distance Dist2 is second shortest. The object distance Dist3 is third shortest. The object distance Dist4 is longest. The CPU 121 executes acquisition of the distance information illustrated in Fig. 6. The CPU 121 extracts an object based on the distance distribution of the object obtained from the focus detection pixels, and acquires area and distance information of each object.

The image processing apparatus according to the first embodiment performs blur restoration of a captured image (i.e., captured image data) based on the distance information and blur information of the photographic lens. The blur generation process can be estimated based on image processing apparatus characteristics and photographic lens characteristics. The image processing apparatus defines a blur restoration filter that models the blur generation process, and performs blurred image restoring processing using the image restoring algorithm such as the Wiener filter, which is generally referred to as "deconvolution", to realize the blur restoration. An example blur restoration method is discussed in Japanese Patent Application Laid-Open No. 2000-20691 (patent literature 2) and therefore the description thereof is omitted.

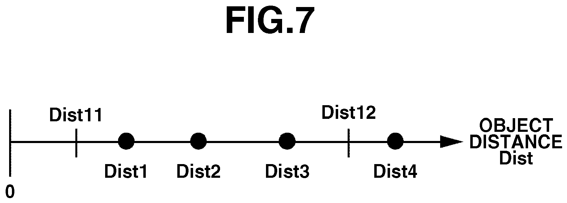

Fig. 7 illustrates the object distances Dist1, Dist2, Dist3, and Dist4 in relation to a blur restorable distance in an example photographic lens state. The blur restorable distance is variable depending on a blur restoration filter that corresponds to the object distance of each photographic lens included in the image processing apparatus. Hence, the CPU 121 calculates a blur restorable distance range according to the state of the focus lens 105 of the photographic lens 137. The blur restorable distance range calculated in this case and the filter to be used for the blur restoration are referred to as "blur restoration information."

The nearest blur restorable distance is referred to as a first distance Distil. The farthest blur restorable distance is referred to as a second distance Dist12. A blur restoration function of the CPU 121 can be applied to any object image in a range defined by the first distance Distil and the second distance Dist12. Of the total of four object distances Dist1, Dist2, Dist3, and Dist4 illustrated in Fig. 6, three object distances Dist1 to Dist3 are positioned within the range defined by the first distance Distil and the second distance Dist12, and only one object distance Dist4 is positioned outside the range.

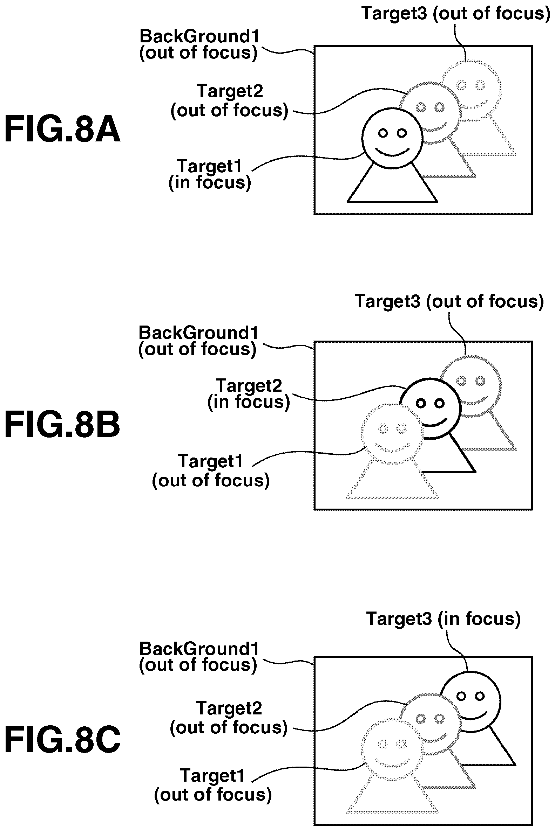

Figs. 8A to 8C illustrate the blur restoration processing on a captured image, which can be performed by the CPU 121 using the blur restoration function. The captured image illustrated in Figs. 8A to 8C is similar to the captured image illustrated in Fig. 6.

Fig. 8A illustrates a state of the blur restoration processing for focusing on the object area Target1. The blur restoration processing in this case includes defining a blur restoration filter based on the image processing apparatus characteristics information and the photographic lens information, which correspond to the object distance Dist1 of the object area Target1. The blur restoration processing further includes restoring the object area Target1 based on the defined blur restoration filter. As a result, the object area Target1 can be restored and an in-focused image can be obtained. In addition, the blur restoration processing is performed on the remaining object areas other than the object area Target1 by defining the blur restoration filters, respectively. Thus, it becomes feasible to acquire the image illustrated in Fig. 8A, which includes the object area Target1 in an in-focus state.

Fig. 8B illustrates a state of the blur restoration processing for focusing on the object area Target2. The blur restoration processing in this case includes defining a blur restoration filter based on the image processing apparatus characteristics information and the photographic lens information, which correspond to the object distance Dist2 of the object area Target2. The blur restoration processing further includes restoring the object area Target2 based on the defined blur restoration filter. As a result, the object area Target2 can be restored and an in-focused image can be obtained. In addition, the blur restoration processing is performed on the remaining object areas other than the object area Target2 by defining the blur restoration filters, respectively. Thus, it becomes feasible to acquire the image illustrated in Fig. 8B, which includes the object area Target2 in an in-focus state.

Fig. 8C illustrates a state of the blur restoration processing for focusing on the object area Target3. The blur restoration processing in this case includes defining a blur restoration filter based on the image processing apparatus characteristics information and the photographic lens information, which correspond to the object distance Dist3 of the object area Target3. The blur restoration processing further includes restoring the object area Target3 based on the defined blur restoration filter. As a result, the object area Target3 can be restored and an in-focused image can be obtained. In addition, the blur restoration processing is performed on the remaining object areas other than the object area Target3 by defining the blur restoration filters, respectively. Thus, it becomes feasible to acquire the image illustrated in Fig. 8C, which includes the object area Target3 in an in-focus state.

As described above with reference to Fig. 8A to Fig. 8C, the image processing apparatus according to the first embodiment can select a target object on which the camera focuses by performing the blur restoration processing based on the distance information that includes the area and distance information of each object.

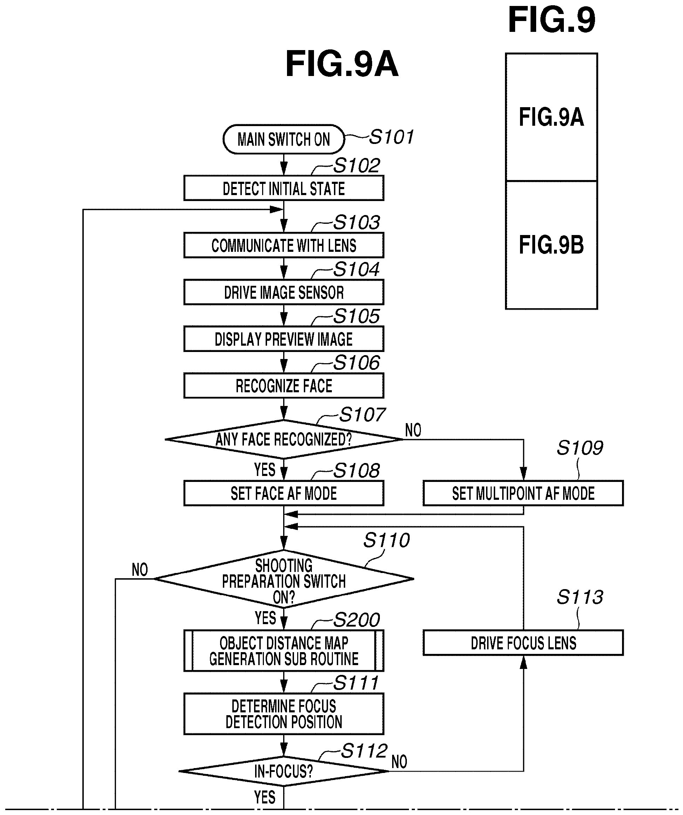

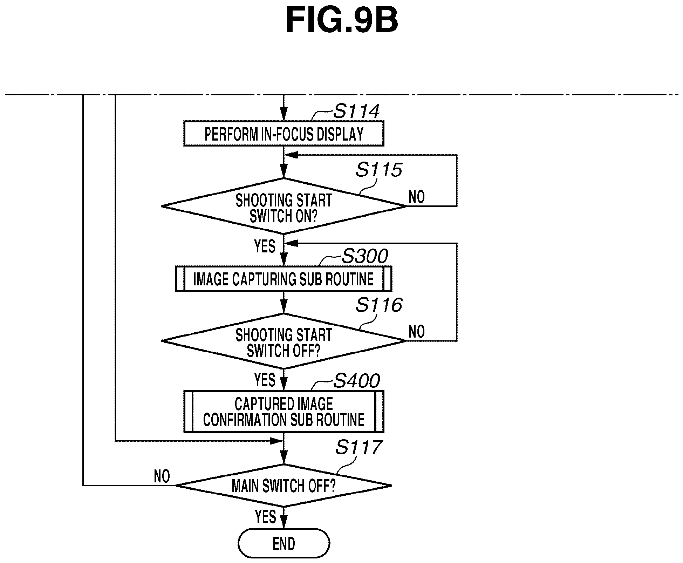

Figs. 9 to 14 are flowcharts illustrating focus adjustment and shooting processing which are performed by the image processing apparatus according to the first embodiment of the present invention. Fig. 9 (including Figs. 9A and 9B) is a flowchart illustrating a main routine of the processing performed by the image processing apparatus according to the first embodiment. The CPU 121 controls the processing to be performed according to the main routine.

In step S101, a photographer turns on the power switch (main switch) of the camera. Then, in step S102, the CPU 121 checks an operational state of each actuator of the camera and an operational state of the image sensor 107, and initializes memory contents and programs to be executed.

In step S103, the CPU 121 performs lens communication with the camera communication circuit 136 provided in the photographic lens 137 via the lens communication circuit 135. Through the lens communication, the CPU 121 checks the operational state of the lens and initializes the memory contents and the programs to be executed in the lens. Further, the CPU 121 causes the lens to perform a preparatory operation. In addition, the CPU 121 acquires various pieces of lens characteristics data, which are required in a focus detecting operation or in a shooting operation, and stores the acquired data pieces in the built-in memory 144 of the camera.

In step S104, the CPU 121 causes the image sensor 107 to start an imaging operation and outputs a low pixel moving image to be used for a preview. In step S105, the CPU 121 causes the display device 131 provided on a back surface of the camera to display a moving image read by the image sensor 107. Thus, the photographer can determine a composition in a shooting operation while visually checking a preview image.

In step S106, the CPU 121 determines whether a face is present in the preview moving image. Further, the CPU 121 detects a number of faces and a position and a size of each face from the preview moving image and stores the acquired information in the built-in memory 144. An example method for recognizing a face is discussed in Japanese Patent Application Laid-Open No. 2004-317699, although the description thereof is omitted.

If it is determined that a face is present in an image capturing area (YES in step S107), the processing proceeds to step S108. In step S108, the CPU 121 sets a face automatic focusing (AF) mode as a focus adjustment mode. In the present embodiment, the face AF mode is an AF mode for adjusting the focus with taking both the face position in the image capturing area and an object distance map generated in step S200, which is described below, into consideration.

On the other hand, if it is determined that there is not any face in the image capturing area (NO in step S107), the processing proceeds from step S107 to step S109. In step S109, the CPU 121 sets a multipoint AF mode as the focus adjustment mode. In the present embodiment, the multipoint AF mode is a mode for dividing the image capturing area into, for example, 15 (= 3 × 5) sub-areas to estimate a main object based on a focus detection result in each sub-area (i.e., a result calculated with reference to the object distance map generated in step S200) and object luminance information, and then bringing the main object area into an in-focus state.

If the AF mode is set in step S108 or step S109, then in step S110, the CPU 121 determines whether the shooting preparation switch is turned on. If it is determined that the shooting preparation switch is not turned on (NO in step S110), the processing proceeds to step S117. In step S117, the CPU 121 determines whether the main switch is turned off.

If it is determined that the shooting preparation switch is turned on (YES in step S110), the processing proceeds to step S200. In step S200, the CPU 121 executes processing of an object distance map generation sub routine.

In step S111, the CPU 121 determines a focus detection position based on the object distance map calculated in step S200. A method for determining the detection position according to the present embodiment is characterized in prioritizing the closest one and setting the position of an object positioned at the nearest side, among the objects obtained in step S200, as the focus detection position.

In step S112, the CPU 121 calculates a focus deviation amount at the focus detection position determined in step S111 based on the object distance map obtained in step S200 and determines whether the obtained focus deviation amount is equal to or less than a predetermined permissible value. If the focus deviation amount is greater than the permissible value (NO in step S112), the CPU 121 determines that the current state is an out-of-focus state. Thus, in step S113, the CPU 121 drives the focus lens 105. Subsequently, the processing returns to step S110, and the CPU 121 determines whether the shooting preparation switch is pressed.

Further, if it is determined that the current state has reached an in-focus state (YES in step S112), then in step S114, the CPU 121 performs in-focus display processing. Then, the processing proceeds to step S115.

In step S115, the CPU 121 determines whether the shooting start switch is turned on. If it is determined that the shooting start switch is not turned on (NO in step S115), the CPU 121 maintains a shooting standby state (namely, repeats the processing of step S115). If it is determined that the shooting start switch is turned on (YES in step S115), then in step S300, the CPU 121 executes processing of an image capturing sub routine.

If the processing in step S300 (i.e., the image capturing sub routine) is completed, then in step S116, the CPU 121 determines whether the shooting start switch is turned off. If the shooting start switch is maintained in an ON state, the CPU 121 repeats the image capturing sub routine in step S300. In this case, the camera performs a continuous shooting operation.

If it is determined that the shooting start switch is turned off (YES in step S116), then in step S400, the CPU 121 executes processing of a captured image confirmation sub routine.

If the processing of step S400 (i.e., the captured image confirmation sub routine) is completed, then in step S117, the CPU 121 determines whether the main switch is turned off. If it is determined that the main switch is not turned off (NO in step S117), the processing returns to step S103. If it is determined that the main switch is turned off (YES in step S117), the CPU 121 terminates the sequential operation.

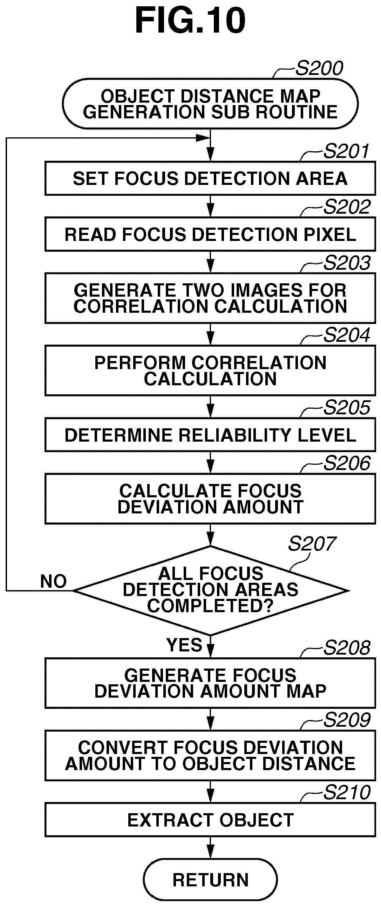

Fig. 10 is a flowchart illustrating details of the object distance map generation sub routine. The CPU 121 executes a sequential operation of the object distance map generation sub routine. If the processing jumps from the step S200 of the main routine to step S200 of the object distance map generation sub routine, then in step S201, the CPU 121 sets a focus detection area. More specifically, the CPU 121 determines a target focus detection area, which is selected from at least one or more focus detection areas determined based on the AF mode, and performs processing in step S202 and subsequent steps.

In step S202, the CPU 121 reads signals from the focus detection pixels in the focus detection area set in step S201. In step S203, the CPU 121 generates two images to be used in correlation calculation. More specifically, the CPU 121 obtains signals of the A image and the B image to be used in the correlation calculation by arranging the signals of respective focus detection pixels read in step S202.

In step S204, the CPU 121 performs correlation calculation based on the obtained images (i.e., the A image and the B image) to calculate a phase difference between the A image and the B image. In step S205, the CPU 121 determines a reliability level of the correlation calculation result. In the present embodiment, the reliability indicates the degree of coincidence between the A image and the B image. If the coincidence between the A image and the B image is excellent, it is generally regarded that the reliability level of the focus detection result is high. Hence, the reliability level of the focus detection result can be determined by checking if the degree of coincidence exceeds a certain threshold value. Further, if there is a plurality of focus detection areas having been selected, it is useful to prioritize a focus detection area having a higher reliability level.

In step S206, the CPU 121 calculates a focus deviation amount by multiplying the phase difference between the A image and the B image obtained in step S204 with a conversion coefficient for converting the phase difference into a corresponding focus deviation amount.

In step S207, the CPU 121 determines whether the above-described focus deviation amount calculation has completed for all focus detection areas. If it is determined that the focus deviation amount calculation has not yet completed for all focus detection areas (NO in step S207), the processing returns to step S201. The CPU 121 sets the next focus detection area that is selected from the remaining focus detection areas. If it is determined that the focus deviation amount calculation has completed for all focus detection areas (YES in step S207), the processing proceeds to step S208.

In step S208, the CPU 121 generates a focus deviation amount map based on the focus deviation amounts of all focus detection areas, which can be obtained by repeating the processing in steps S201 to S207. In the present embodiment, the focus deviation amount map is distribution data that correlates the position on the image frame with the focus deviation amount.

In step S209, the CPU 121 performs conversion processing on the focus deviation amount map obtained in step S208 to acquire object distance information converted from the focus deviation amount considering the lens information acquired from the photographic lens 137 through the lens communication performed in step S103. Thus, the CPU 121 can obtain distribution data that associates the position on the image frame with the object distance.

In step S210, the CPU 121 extracts an object based on the object distance distribution data. The CPU 121 performs grouping in such a way as to join a plurality of object areas that have similar distance in the obtained object distance distribution, and extracts the contour of each object included in the image frame. Thus, the CPU 121 can obtain an object distance map that associates each object area with the distance of the object. If the processing of step S210 is completed, the CPU 121 terminates the object distance map generation sub routine. Subsequently, the processing proceeds to step S111 of the main routine.

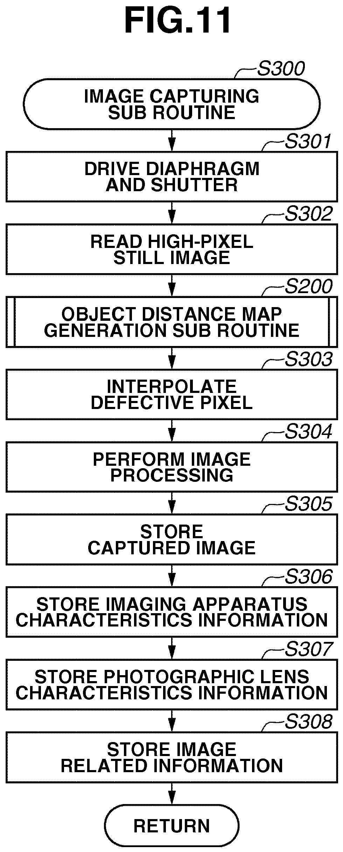

Fig. 11 is a flowchart illustrating details of the image capturing sub routine. The CPU 121 executes a sequential operation of the image capturing sub routine. In step S301, the CPU 121 drives the diaphragm 102 to adjust the quantity of light and performs aperture control for a mechanical shutter that regulates the exposure time. In step S302, the CPU 121 performs image reading processing for capturing a high-pixel still image. Namely, the CPU 121 reads signals from all pixels.

In step S200, the CPU 121 performs the object distance map generation sub routine of step S200 illustrated in Fig. 10, using the outputs of the focus detection pixels included in the captured image obtained in step S302. Accordingly, the focus deviation amount of a captured image can be obtained with reference to the obtained object distance map that associates each object area and the object distance thereof.

Compared to the object distance map generation sub routine performed in step S200 after completing the processing of step S110 in Fig. 9, it is feasible to generate more accurate object distance map because the number of pixels of an obtained image is large. However, the generation of an object distance map based on a high-pixel still image may require a long processing time or an expensive processing apparatus because the number of pixels to be processed is large. To this end, generating the object distance map is not essential in this sub routine.

In step S303, the CPU 121 performs defective pixel interpolation for the read image signal. More specifically, the output of each focus detection pixel does not include any RGB color information to be used in an image capturing operation. In this respect, each focus detection pixel can be regarded as a defective pixel in the image capturing operation. Therefore, the CPU 121 generates an image signal based on interpolation using the information of peripheral image capturing pixels.

In step S304, the CPU 121 performs image processing, such as gamma correction, color conversion, and edge enhancement, on the image. In step S305, the CPU 121 stores the captured image in the flash memory 133.

In step 306, the CPU 121 stores image processing apparatus characteristics information (i.e., imaging apparatus characteristics information described in Fig. 11), in association with the captured image stored in step S305, in the flash memory 133 and the built-in memory 144.

In the present embodiment, the image processing apparatus characteristics information of the main camera body 138 includes light receiving sensitivity distribution information of image capturing pixels and focus detection pixels of the image sensor 107, vignetting information of imaging light flux in the main camera body 138, distance information indicating a distance from the image sensor 107 to a setup surface of the photographic lens 137 on the main camera body 138, manufacturing error information, and the like. The on-chip microlens ML and the photoelectric conversion element PD determine the light receiving sensitivity distribution information of the image capturing pixels and the focus detection pixels of the image sensor 107. Therefore, it is useful to store information relating to the on-chip microlens ML and the photoelectric conversion element PD.

In step S307, the CPU 121 stores photographic lens characteristics information of the photographic lens 137, in association with the captured image stored in step S305, in the flash memory 133 and the built-in memory 144.

In the present embodiment, the photographic lens characteristics information includes exit pupil EP information, frame information, shooting F-number information, aberration information, manufacturing error information, and the like. In step S308, the CPU 121 stores image related information (i.e., information relevant to the captured image) in the flash memory 133 and the built-in memory 144. The image related information includes information relating to focus detection result in a shooting operation, object recognition information required to confirm the presence of a human face, and the like.

The information relating to the focus detection result in a shooting operation includes object distance map information and positional information of the focus lens 105 in the shooting operation. The object recognition information includes information indicating the presence of an object (e.g., a human or an animal) in a captured image and, if the object is included, information indicating the position and range of the object in the image. The above-described information pieces are stored in association with the image.

If the processing in step S308 is completed, the CPU 121 terminates the image capturing sub routine in step S300. Then, the processing proceeds to step S116 of the main routine.

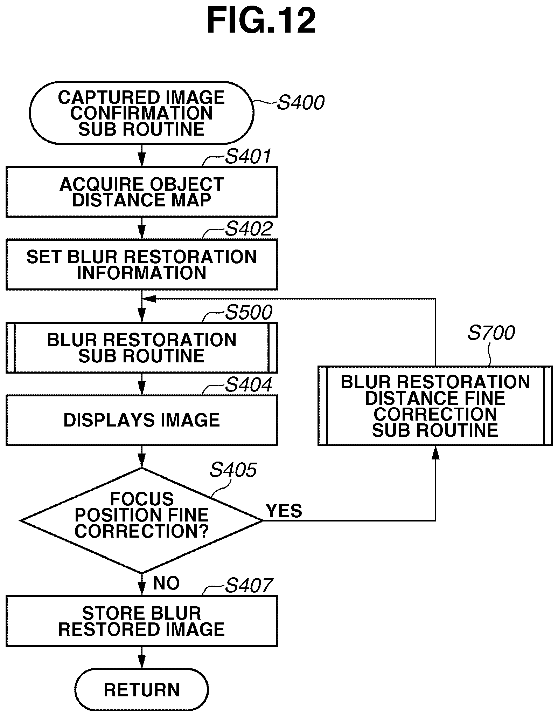

Fig. 12 is a flowchart illustrating details of the captured image confirmation sub routine. The CPU 121 executes a sequential operation of the captured image confirmation sub routine. In step S401, the CPU 121 acquires the object distance map generated in step S200. The object distance map acquired in step S401 is the object distance map that can be generated from the preview image or the object distance map that can be generated through the high-pixel still image capturing operation. If the accuracy in the detection of the object area and the object distance is required, it is desirable to use the object distance map generated through the high-pixel still image capturing operation.

In step S402, the CPU 121 sets a blur restoration filter to be used in the blur restoration processing according to the blur restorable object distance range and the object distance. As described in the object distance map generation sub routine in step S200, information that correlates the object area with the object distance can be obtained with reference to the acquired object distance map. Further, as described with reference to Fig. 7, the blur restorable distance is variable depending on the type of the photographic lens 137. Therefore, the first distance Distil, which is the nearest blur restorable distance, and the second distance Dist12, which is the farthest blur restorable distance, are variable.

Hence, the CPU 121 sets an area of an object, which is positioned within the blur restorable distance range (from the first distance Distil to the second distance Dist12) that is dependent on the photographic lens 137, in the image as a blur restorable area. Thus, each object area can be set together with an object distance and the blur restoration filter to be used in the blur restoration of the object area. According to the example illustrated in Fig. 6, three object areas Target1, Target2, and Target3 are blur restoration ranges, respectively. Further, three distances Dist1, Dist2, and Dist3 are object distance ranges, respectively.

The blur restorable area, the object distance range, and the blur restoration filter to be used in the blur restoration processing are collectively referred to as "blur restoration information." Further, in this sub routine, the CPU 121 determines a first target object distance to be subjected to the blur restoration processing. For example, the CPU 121 can perform blur restoration processing in such a way as to bring the nearest object into an in-focus state. Alternatively, the CPU 121 can perform blur restoration processing in such a way as to bring an object having a smaller defocus amount relative to a captured image into an in-focus state. In the following description, the object distance subjected to processing for adjusting the focus state in the blur restoration processing is referred to as "blur restoration distance."

If the blur restoration information setting in step S402 has been completed, the processing proceeds to step S500 (i.e., a blur restoration sub routine) . In step S404, the CPU 121 displays a restored image that has restored from the blurred image obtained in step S500 on the display device 131.

If the processing in step S404 has been completed, then in step S405, the CPU 121 confirms the presence of a focus position fine correction instruction. If the focus position fine correction instruction is issued in response to an operation of the photographer (YES in step S405), the processing proceeds to step S700. In step S700, the CPU 121 performs a blur restoration distance fine correction sub routine to finely correct the information relating to the blur restoration distance of step S500. The CPU 121 performs the fine correction of the blur restoration distance information within the object distance range having been set in step S402. An example method for finely correcting the blur restoration distance information is described in detail below.

If the fine correction of the blur restoration distance information in step S700 has been completed, the processing returns to step S500. The CPU 121 performs the blur restoration processing again.

If it is determined that the focus position fine correction instruction is not present (NO in step S405), the processing proceeds to step S407. In step S407, the CPU 121 stores the restored image that has restored from the blurred image together with the information used in the blur restoration processing. If the processing in step S407 is completed, the CPU 121 terminates the captured image confirmation sub routine. Subsequently, the processing returns to the main routine.

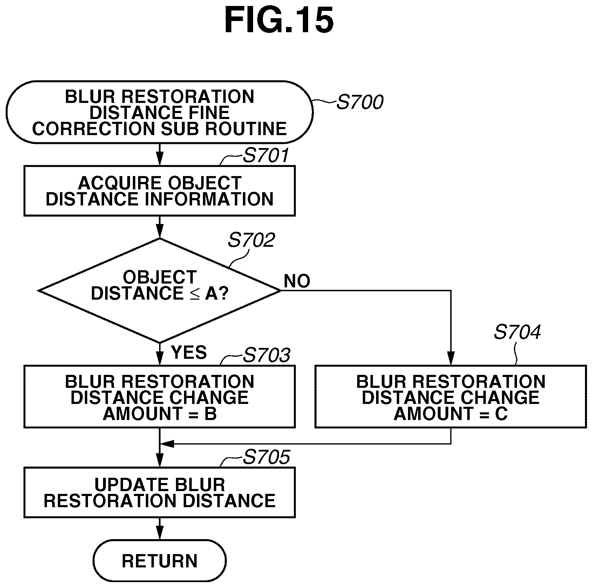

Fig. 15 is a flowchart illustrating details of the blur restoration distance information fine correction sub routine. The CPU 121 executes a sequential operation of the blur restoration distance information fine correction sub routine. Although the blur restoration distance correction is performed finely according to the flowchart illustrated in Fig. 15, the blur restoration distance correction is not limited to the fine correction and can be any type of blur restoration distance correction.

In step S701, the CPU 121 acquires, as object distance information, the blur restoration distance in the previous blur restoration processing and the object distance map obtained from the captured image. The CPU 121 calculates the distance of the object in the captured image based on the acquired information with reference to the blur restoration distance.

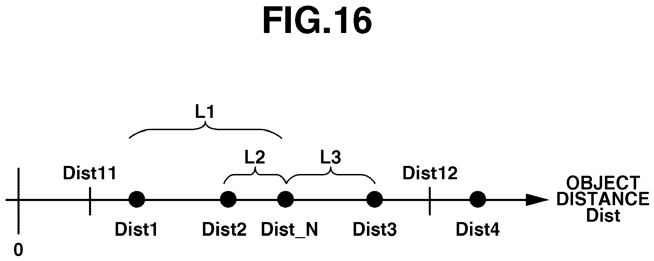

Fig. 16 illustrates the object distances in relation to the blur restoration distance at which the fine correction of the focus position is performed, which includes a previous blur restoration distance Dist_N in addition to the distances illustrated in Fig. 7. When the blur restoration processing is performed with reference to the object distance Dist_N, at which the camera can be focused, the distances Dist1 to Dist3 obtained from the object distance map are calculated as distances L1 to L3, respectively. In these distances, an object having the smallest value (Target2 according to the example illustrated in Fig. 16) is blur restored so as to be in focus more accurately.

When determining whether a target object is in focus, a photographer can confirm an in-focused image accurately by performing blur restoration while finely changing the blur restoration distance. On the other hand, if the blur restoration distance is different from the object distance, in other words, when each of the distances L1 to L3 has a large value to some extent, all of the objects are out of focus. Therefore, it is difficult for the photographer to identify the focus state of the object accurately. Further, the object may not be an image that the photographer wants to confirm the focus state.

Hence, in the first embodiment, the CPU 121 determines whether the object distance (L1 to L3) with reference to the blur restoration distance is smaller than a predetermined threshold value, and sets a blur restoration distance at which the next blur restoration processing is performed based on the determination result.

In step S702, the CPU 121 determines whether the object distance (L1 to L3) with reference to the previous blur restoration distance is smaller than a predetermined threshold value "A." When the object distance (L1 to L3) with reference to the blur restoration distance is smaller than the predetermined threshold value "A" (YES in step S702), the processing proceeds to step S703. On the other hand, if the determination result in step S702 is NO, the processing proceeds to step S704.

In steps S703 and S704, the CPU 121 sets a blur restoration distance change amount to be used in the next blur restoration processing. The blur restoration distance change amount is an interval between the previous blur restoration distance and the next blur restoration distance. In step S703, the CPU 121 sets a predetermined change amount B as the blur restoration distance change amount. In step S704, the CPU 121 sets a predetermined change amount C, which is larger than the change amount B, as the blur restoration distance change amount. If the setting of the blur restoration distance change amount in step S703 or S704 is completed, the processing proceeds to step S705.

In step S705, the CPU 121 adds the blur restoration distance change amount set in step S703 or step S704 to the blur restoration distance in the previous blur restoration processing. Then, the CPU 121 sets the blur restoration distance to be used in the next blur restoration processing.

As described above, when a relationship between the object distance obtained from the object distance map and the object distance having been subjected to the blur restoration processing is taken into consideration in setting the object distance for performing the next blur restoration, the following advantages are obtainable.

When a photographer performs focus correction on a captured image, the photographer generally performs the blur restoration at smaller pitches at the distance where an object targeted by the photographer is substantially focused. If the image processing apparatus performs blur restoration at smaller pitches for all object distances in the entire blur restorable range, many areas are useless for the photographer even if these areas are restorable and a significantly long processing time is required. Therefore, the photographer cannot perform a comfortable operation. On the other hand, the image processing apparatus according to the first embodiment can selectively perform the blur restoration processing in a narrower object distance range, which includes a blurred image targeted by the photographer, by limiting the range in which the blur restoration can be performed at smaller pitches based on information relating to a captured image. Accordingly, the image processing apparatus according to the first embodiment can reduce the calculation load in the blur restoration processing. Further, the image processing apparatus according to the first embodiment can realize the focus correction processing that is comfortable for the photographer because a long processing time is not required.

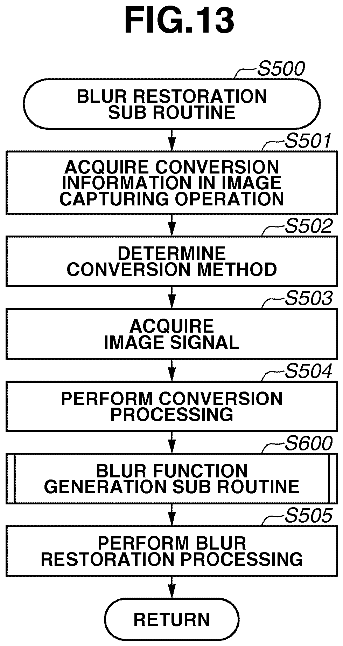

Fig. 13 is a flowchart illustrating details of the blur restoration sub routine. The CPU 121 executes a sequential operation of the blur restoration sub routine. In step S501, the CPU 121 acquires conversion information that indicates conversion processing contents (i.e., a conversion method) in an image capturing operation to be performed by the image processing circuit 125.

In step S502, the CPU 121 determines a conversion method for converting image information supplied from the image processing circuit 125. More specifically, the CPU 121 determines the conversion method based on the conversion information acquired in step S501 (if necessary, in addition to the image processing apparatus characteristics information acquired in step S306, and the photographic lens characteristics information acquired in step S307). The conversion method determined in this case is a method for converting the image information in such a way as to realize a proportional relationship between an exposure value and a pixel value to secure linearity as the precondition for the algorithm of the image restoring processing discussed in Japanese Patent Application Laid-Open No. 2000-20691 (patent literature 2).

For example, when the image processing circuit 125 executes gamma correction processing, the CPU 121 determines inverse transformation of the gamma correction based conversion as the conversion method in step S502. Thus, a pre-conversion image can be reproduced and an image having linearity characteristics can be acquired. Similarly, when the image processing circuit 125 executes color conversion processing, the CPU 121 determines inverse transformation of the color conversion based conversion as the conversion method in step S502. Thus, an image having linearity characteristics can be acquired. As described above, in step S502, the CPU 121 determines the conversion method that corresponds to inverse transformation of the conversion processing to be performed by the image processing circuit 125.

In step S503, the CPU 121 acquires the captured image from the image processing circuit 125. Then, in step S504, the CPU 121 converts the acquired captured image according to the conversion method determined in step S502.

EP 3 285 229 B1

If the conversion processing in step S504 is completed, the processing proceeds to step S600. In step S600, the CPU 121 generates a blur function. The blur function is similar to the above-described blur restoration filter in the meaning.

In step S505, the CPU 121 performs calculations using the blur function generated in step S600. For example, the CPU 121 multiplies the Fourier transform of the captured image by a reciprocal of the Fourier transform of the blur function and obtains an inverse Fourier transform of the obtained value. Through the above-described inverse transformation, the CPU 121 performs blur restoration processing on the captured image subjected to the conversion processing in step S504. In this sub routine, the CPU 121 performs the blur restoration processing using the image restoring algorithm that is generally referred to as "deconvolution processing." Thus, an image of a predetermined object restored from a blurred image can be obtained. An example blur restoration method that includes performing inverse transformation of the blur function is discussed in Japanese Patent Application Laid-Open No. 2000-20691 and therefore the description thereof is omitted. If the processing in step S505 is completed, the CPU 121 terminates the blur restoration sub routine. Subsequently, the processing proceeds to step S404 in the captured image confirmation sub routine.

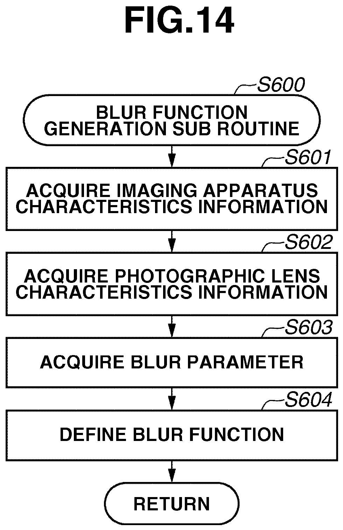

Fig. 14 is a flowchart illustrating details of a blur function generation sub routine. The CPU 121 executes a sequential operation of the blur function generation sub routine. In step S601, the CPU 121 acquires the image processing apparatus characteristics information (i.e., imaging apparatus characteristics information described in Fig. 14) stored in the built-in memory 144 during the shooting operation in step S305. In step S602, the CPU 121 acquires the photographic lens characteristics information stored in the built-in memory 144 during the shooting operation in step S306.

In step S603, the CPU 121 acquires parameters to be used to define the blur function. The blur function is determined by optical transfer characteristics between the photographic lens 137 and the image sensor 107. Further, the optical transfer characteristics are variable depending on various factors, such as the image processing apparatus characteristics information, the photographic lens characteristics information, the object area position in the captured image, and the object distance. Hence, it is useful to store table data that can correlate the above-described factors with the parameters to be used when the blur function is defined, in the built-in memory 144. When the processing in step S603 is executed, the CPU 121 acquires blur parameters to be used when the blur function is defined, based on the above-described factors, from the built-in memory 144.

In step S604, the CPU 121 defines the blur function based on the blur parameters acquired in step S603. An example of the blur function is a Gaussian distribution, which is obtainable based on the assumption that a blur phenomenon can be expressed according to the normal distribution rule. When "r" represents the distance from a central pixel and $\sigma^2$ represents an arbitrary parameter of the normal distribution rule, the blur function h(r) can be defined in the following manner.

$$h(r) = \{1/(\sigma\sqrt{(2\pi)})\}\cdot\exp(-r^2/\sigma^2)$$

If the processing in step S604 is completed, the CPU 121 terminates the blur function generation sub routine. The processing proceeds to step S505 of the blur restoration sub routine.

The image processing apparatus according to the first embodiment performs the fine correction of the focus position in a reproduction operation performed immediately after the shooting operation. The occasion to perform the fine correction of the focus position is not limited to the above-described case. The present invention can be applied to a case in which the fine correction of the focus position is performed when a previously captured image is reproduced.

Further, the image processing apparatus according to the first embodiment has been described based on the camera whose photographic lens is exchangeable. However, the present invention can be applied to a lens tied camera that includes a photographic lens equipped beforehand. However, the lens tied camera is not free from the above-described conventional problem. Therefore, the similar effects can be obtained by narrowing the object distance range in which the blur restoration is performed at smaller pitches as described in the first embodiment.

Further, the image processing apparatus according to the first embodiment has been described based on the camera that includes the image sensor capable of performing focus detection. However, the present invention can be applied to a camera that includes another focus detection unit. The camera that includes another focus detection unit is not free from the above-described conventional problem. Therefore, the similar effects can be obtained by narrowing the object distance range in which the blur restoration is performed at smaller pitches as described in the first embodiment.

Furthermore, the image processing apparatus according to the first embodiment acquires object distance information by performing focus detection and uses the acquired information to narrow the object distance range in which the blur restoration is performed at smaller pitches. However, the image processing apparatus according to the first embodiment can perform similar processing using object recognition information detected in an image restored from a blurred image. For example, if a human face is detected as an object in an image restored from a blurred image in a previous blur restoration processing, it is determined that a photographer may confirm the focus state. In this case, the image processing apparatus performs blur restoration processing at smaller pitches.

A method for setting a focus detection range to perform the focus detection based on object recognition information is generally known. It is effective that the object recognition can be performed in a wider object distance range when the object recognition information is used in the focus detection.

On the other hand, if the object recognition is performed to confirm the focus state as described in the first embodiment, focus confirmation is not likely to be performed in a state in which a recognized object is greatly blurred. Therefore, it is useful to perform the recognition in an object distance range that is narrower than a value to be set in the focus detection.

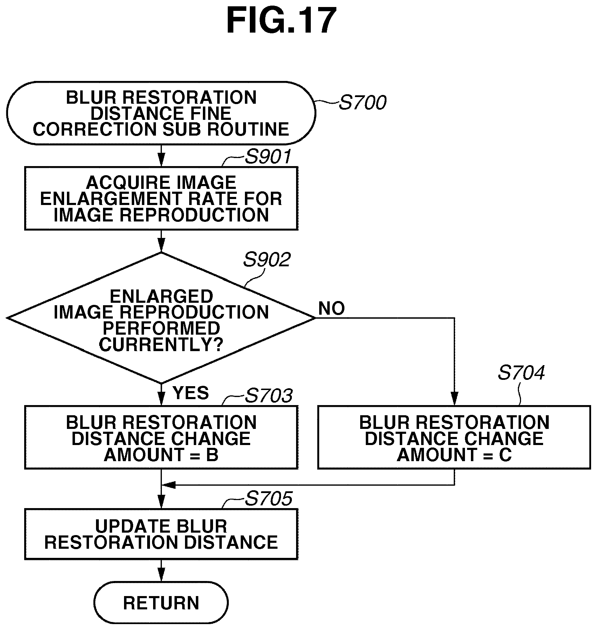

An image processing apparatus according to a second embodiment of the present invention is described below with reference to Fig. 17. The second embodiment is different from the first embodiment in the image related information to be used in narrowing the object distance range in which the blur restoration can be performed at smaller pitches. The configuration according to the second embodiment can recognize an object targeted by a photographer more correctly and can set the object distance range accurately in which the blur restoration can be performed at smaller pitches.

The image processing apparatus according to the second embodiment is similar to the image processing apparatus according to the first embodiment in the system block diagram (see Fig. 1), the focus detection method (see Fig. 2A to Fig. 5), the blur restoration method (see Fig. 6 to Fig. 8), the shooting related operation (see Fig. 9 to Fig. 11), and the blur restoration processing (see Fig. 13 and Fig. 14). Further, the image processing apparatus according to the second embodiment performs operations similar to those described in the first embodiment, although the description thereof is not repeated.

The blur restoration distance fine correction sub routine (i.e., the processing to be performed in step S700 of the captured image confirmation sub routine illustrated in Fig. 12) is described in detail below with reference to the flowchart illustrated in Fig. 17. The flowchart illustrated in Fig. 17 includes processing steps similar to those of the blur restoration distance fine correction sub routine described in the first embodiment (see Fig. 15). Respective steps similar to those illustrated in Fig. 15 are denoted by the same reference numerals. Although the blur restoration distance correction is performed finely according to the flowchart illustrated in Fig. 17, the blur restoration distance correction is not limited to the fine correction and can be any type of blur restoration distance correction.

In step S901, the CPU 121 acquires information relating to an enlargement rate of an image to be reproduced. In the second embodiment, the CPU 121 determines whether a photographer is currently performing focus confirmation based on the acquired information indicating the enlargement rate of the reproduction image. When the photographer determines whether the object is in focus, it is desirable to reproduce an enlarged image to perform the focus confirmation accurately. To this end, in the second embodiment, the CPU 121 determines that the photographer is performing the focus confirmation if reproduction of an enlarged image is currently performed. The CPU 121 then performs the blur restoration while changing the blur restoration distance at smaller pitches.

In step S902, the CPU 121 determines whether the reproduction of an enlarged image is currently performed. If the reproduction of an enlarged image is currently performed (YES in step S902), the processing proceeds to step S703. On the other hand, if the determination result in step S902 is NO, the processing proceeds to step S704.

In steps S703 and S704, the CPU 121 sets a blur restoration distance change amount to be used in the next blur restoration processing. In step S703, the CPU 121 sets a change amount B as the blur restoration distance change amount. In step S704, the CPU 121 sets a change amount C, which is larger than the change amount B, as the blur restoration distance change amount. If the setting of the blur restoration distance change amount in step S703 or S704 is completed, the processing proceeds to step S705.

In step S705, the CPU 121 adds the blur restoration distance change amount set in step S703 or step S704 to the blur restoration distance in the previous blur restoration processing. Then, the CPU 121 sets the blur restoration distance to be used in the next blur restoration processing.

As described above, when the enlargement rate to be used in the image reproduction processing is taken into consideration in setting the blur restoration distance for performing the next blur restoration, the following advantages are obtainable.

When a photographer performs focus position fine correction on a captured image, the photographer generally performs the blur restoration at smaller pitches while reproducing an enlarged image of an object targeted by the photographer. If the image processing apparatus performs blur restoration at smaller pitches for all object distances in the entire blur restorable range, many areas are useless for the photographer even if these areas are restorable and a significantly long processing time is required. Therefore, the photographer cannot perform a comfortable operation.

On the other hand, the image processing apparatus according to the second embodiment can selectively perform the blur restoration processing in a narrower object distance range, which includes a blurred image targeted by the photographer, by limiting the range in which the blur restoration can be performed at smaller pitches based on information relating to a captured image. Accordingly, the image processing apparatus according to the second embodiment can reduce the calculation load in the blur restoration processing. Further, the image processing apparatus according to the second embodiment can realize the focus correction processing that is comfortable for the photographer because a long processing time is not required.

Further, the image processing apparatus according to the second embodiment sets a blur restoration distance change amount appropriately by checking whether reproduction of an enlarged image is currently performed. However, it is useful to add another condition in the above-described setting. For example, the second embodiment can be combined with the first embodiment. In this case, if the reproduction of an enlarged image is currently performed and further if it is adjacent to an object distance in an enlarged reproduced range, the CPU 121 can further reduce the blur restoration distance change amount. In this case, the object distance range can be further narrowed efficiently in which the blur restoration can be performed at smaller pitches. As a result, similar effects can be obtained.

Aspects of the present invention can also be realized by a computer of a system or apparatus (or devices such as a CPU or a micro processing unit (MPU)) that reads out and executes a program recorded on a memory device to perform the functions of the above-described embodiment (s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to embodiments, it is to be understood that the invention is defined by the appended claims.

## Claims

1. An image processing apparatus comprising:

   a blur restoration means (121) arranged to set one of a plurality of object distances, each of which is associated with a respective object in a blurred image, as a blur restoration distance and to restore an image as a blur restoration processing from the blurred image by performing deconvolution processing on the blurred image according to the blur restoration distance;
   an instruction means (121) arranged to instruct the blur restoration means to change the blur restoration distance;
   a display means (121) arranged to perform a display of the restored image restored by the blur restoration means on a display device(131); and
   **characterized in that**
   if a fine correction instruction is issued by the instruction means in response to an operation of the photographer if it is determined that a reproduction of an enlarged image is performed, the blur restoration means changes the blur restoration distance with a first change amount, and if it is determined that the reproduction of an enlarged image is not performed, the blur restoration means changes the blur restoration distance with a second change amount larger than said first change amount, and the blur restoration means restores the image from the blurred image according to the changed blur restoration distance.

2. The image processing apparatus according to claim 1, further comprising generating means arranged to generate an object distance map by extracting each object and its associated object distance included in a blurred image.

3. The image processing apparatus according to claim 1, wherein the blur restoration processing is performed based on information about an image pickup element of the image capturing means and a photographing lens stored in a memory.

4. The image processing apparatus according to claim 1, wherein the blur restoration processing includes deconvolution processing.

5. The image processing apparatus according to claim 1, wherein the blur restoration processing includes performing inverse transformation of a blur function.

6. The image processing apparatus according to claim 1, further comprising imaging means provided with a first photoelectric conversion element and a second photoelectric conversion element which are arranged to receive light fluxes passed through different pupils.

7. The image processing apparatus according to claim 6, further comprising acquiring means arranged to acquire the distance information by detecting a phase difference between signals from the first and second photoelectric conversion portions.

8. The image processing apparatus according to claim 7, wherein the acquiring means determines a reliability of the distance information based on the signals from the first and second photoelectric conversion elements.

9. The image processing apparatus according to claim 7, wherein the acquiring means determines the reliability of the distance information based on a degree of coincidence between images of the signals from the first and second photoelectric conversion portions.

10. A method for controlling an image processing apparatus comprising:

setting (S402) one of a plurality of object distances, each of which is associated with a respective object in a blurred image, as a blur restoration distance;
restoring (S500) an image as a blur restoration processing from the blurred image by performing deconvolution processing on the blurred image according to the blur restoration distance;
instructing (S703, S704) the blur restoration means to change the blur restoration distance
performing (S405) a display of the image data generated on a display device; and
**characterized in that**
if a fine correction instruction is issued in response to an operation of the photographer if it is determined that a reproduction of an enlarged image is performed (S702), the blur restoration distance is changed with a first change amount (S902), and if it is determined that the reproduction of an enlarged image is not performed, the blur restoration distance is changed with a second change amount larger than said first change amount (S704), the image is restored from the blurred image according to the changed blur restoration distance.

**Patentansprüche**

1. Bildverarbeitungsvorrichtung, umfassend:

eine Unschärferestaurationseinrichtung (121), die dafür ausgelegt ist, einen von mehreren Objektabständen, die jeweils zu einem jeweiligen Objekt im unscharfen Bild gehören, als Unschärferestaurationsabstand einzustellen und ein Bild als Unschärferestaurationsverarbeitung aus dem unscharfen Bild zu restaurieren durch Durchführen einer Dekonvolutionsverarbeitung am unscharfen Bild gemäß dem Unschärferestaurationsabstand;
eine Anweisungseinrichtung (121), die dafür ausgelegt ist, die Unschärferestaurationseinrichtung anzuweisen, den Unschärferestaurationsabstand zu ändern;
eine Anzeigeeinrichtung (121), die dafür ausgelegt ist, eine Anzeige des durch die Unschärferestaurationseinrichtung restaurierten Bildes auf einem Anzeigedevice (131) durchzuführen; und
**dadurch gekennzeichnet, dass**,
falls durch die Anweisungseinrichtung eine Anweisung zur Feinkorrektur ausgegeben wird als Antwort auf eine Betätigung des Photographen, falls bestimmt wird, dass eine Wiedergabe eines vergrößerten Bildes durchgeführt wird, die Unschärferestaurationseinrichtung den Unschärferestaurationsabstand mit einem ersten Änderungsbetrag ändert, und falls bestimmt wird, dass die Wiedergabe eines vergrößerten Bildes nicht durchgeführt wird, die Unschärferestaurationseinrichtung den Unschärferestaurationsabstand mit einem zweiten Änderungsbetrag ändert, der größer als der erste Änderungsbetrag ist, sowie die Unschärferestaurationseinrichtung das Bild aus dem unscharfen Bild gemäß dem geänderten Unschärferestaurationsabstand restauriert.

2. Bildverarbeitungsvorrichtung nach Anspruch 1, weiterhin umfassend eine Erzeugungseinrichtung, die dafür ausgelegt ist, durch Extrahieren eines jeweiligen in einem unscharfen Bild enthaltenen Objekts und seines dazugehörigen Objektabstands eine Objektabstandskarte zu erzeugen.

3. Bildverarbeitungsvorrichtung nach Anspruch 1, wobei die Unschärferestaurationsverarbeitung basierend auf in einem Speicher gespeicherter Information über ein Bildaufnahmeelement der Bildaufnahmeeinrichtung und ein photographisches Objektiv durchgeführt wird.

4. Bildverarbeitungsvorrichtung nach Anspruch 1, wobei die Unschärferestaurationsverarbeitung Dekonvolutionsverarbeitung beinhaltet.

5. Bildverarbeitungsvorrichtung nach Anspruch 1, wobei die Unschärferestaurationsverarbeitung ein Durchführen einer inversen Transformation der Unschärfefunktion beinhaltet.

6. Bildverarbeitungsvorrichtung nach Anspruch 1, weiterhin umfassend eine Abbildungseinrichtung mit einem ersten Element zur photoelektrischen Umwandlung und einem zweiten Element zur photoelektrischen Umwandlung, die dafür ausgelegt sind, durch unterschiedliche Pupillen hindurchgelaufene Lichtströme zu empfangen.

7. Bildverarbeitungsvorrichtung nach Anspruch 6, weiterhin umfassend eine Erfassungseinrichtung, die dafür ausgelegt ist, die Abstandsinformation durch Detektieren einer Phasendifferenz zwischen Signalen vom ersten und zweiten Abschnitt zur photoelektrischen Umwandlung zu erfassen.

8. Bildverarbeitungsvorrichtung nach Anspruch 7, wobei die Erfassungseinrichtung eine Verlässlichkeit der Abstandsinformation basierend auf den Signalen vom ersten und zweiten Element zur photoelektrischen Umwandlung bestimmt.

9. Bildverarbeitungsvorrichtung nach Anspruch 7, wobei die Erfassungseinrichtung die Verlässlichkeit der Abstandsinformation basierend auf einem Grad an Übereinstimmung zwischen Bildern der Signale vom ersten und zweiten Abschnitt zur photoelektrischen Umwandlung bestimmt.

10. Verfahren zum Steuern einer Bildverarbeitungsvorrichtung, umfassend:

Einstellen (S402) eines von mehreren Objektabständen, die jeweils zu einem jeweiligen Objekt im unscharfen Bild gehören, als Unschärferestaurationsabstand;
Restaurieren (S500) eines Bilds als Unschärferestaurationsverarbeitung aus dem unscharfen Bild durch Durchführen einer Dekonvolutionsverarbeitung am unscharfen Bild gemäß dem Unschärferestaurationsabstand;
Anweisen (S703, S704) der Unschärferestaurationseinrichtung, den Unschärferestaurationsabstand zu ändern;
Durchführen (S405) einer Anzeige der erzeugten Bilddaten auf einem Anzeigedevice; und
**dadurch gekennzeichnet, dass**,
falls eine Anweisung zur Feinkorrektur ausgegeben wird als Antwort auf eine Betätigung des Photographen, falls bestimmt wird, dass eine Wiedergabe eines vergrößerten Bildes durchgeführt wird (S702), der Unschärferestaurationsabstand mit einem ersten Änderungsbetrag geändert wird (S902), und falls bestimmt wird, dass die Wiedergabe eines vergrößerten Bildes nicht durchgeführt wird, der Unschärferestaurationsabstand mit einem zweiten Änderungsbetrag geändert wird, der größer als der erste Änderungsbetrag ist (S704), das Bild aus dem unscharfen Bild gemäß dem geänderten Unschärferestaurationsabstand restauriert wird.

**Revendications**

1. Appareil de traitement d'image, comprenant :

un moyen de restauration de flou (121) conçu pour définir une distance d'une pluralité de distances d'objets, dont chacune est associée à un objet respectif dans une image floue, en tant que distance de restauration de flou et pour restaurer une image en tant que traitement de restauration de flou à partir de l'image floue par une application d'un traitement de déconvolution à l'image floue conformément à la distance de restauration de flou ;
un moyen d'instruction (121) conçu pour ordonner au moyen de restauration de flou de modifier la distance de restauration de flou ;
un moyen d'affichage (121) conçu pour effectuer un affichage de l'image restaurée, restaurée par le moyen de restauration de flou, sur un dispositif d'affichage (131) ; et
**caractérisé en ce que**
si une instruction de correction fine est émise par le moyen d'instruction en réponse à une opération du photographe s'il est déterminé qu'une reproduction d'une image agrandie est effectuée, le moyen de restauration de flou modifie la distance de restauration de flou d'une première quantité de modification et, s'il est déterminé que la reproduction d'une image agrandie n'est pas effectuée, le moyen de restauration de flou modifie la distance de restauration de flou d'une seconde quantité de modification supérieure à ladite première quantité de modification, et le moyen de restauration de flou restaure l'image à partir de l'image floue conformément à la distance de restauration de flou modifiée.

2. Appareil de traitement d'image selon la revendication 1, comprenant en outre un moyen de génération conçu pour générer une carte de distances d'objets par une extraction de chaque objet et de sa distance d'objet associée compris dans une image floue.

3. Appareil de traitement d'image selon la revendication 1, dans lequel le traitement de restauration de flou est effectué sur la base d'informations concernant un élément de capture d'image du moyen de capture d'image et une lentille de photographie mémorisées dans une mémoire.

4. Appareil de traitement d'image selon la revendication 1, dans lequel le traitement de restauration de flou comprend un traitement de déconvolution.

5. Appareil de traitement d'image selon la revendication 1, dans lequel le traitement de restauration de flou comprend une exécution d'une transformation inverse d'une fonction de flou.

6. Appareil de traitement d'image selon la revendication 1, comprenant en outre un moyen de formation d'image fourni avec un premier élément de conversion photoélectrique et un second élément de conversion photoélectrique qui sont disposés pour recevoir des flux de lumière ayant traversé différentes pupilles.

7. Appareil de traitement d'image selon la revendication 6, comprenant en outre un moyen d'acquisition arrangé pour acquérir les informations de distance par une détection d'une différence de phase entre des signaux issus des première et seconde parties de conversion photoélectrique.

8. Appareil de traitement d'image selon la revendication 7, dans lequel le moyen d'acquisition détermine une fiabilité des informations de distance sur la base des signaux issus des premier et second éléments de conversion photoélectrique.

9. Appareil de traitement d'image selon la revendication 7, dans lequel le moyen d'acquisition détermine la fiabilité des informations de distance sur la base d'un degré de coïncidence entre des images des signaux issus des première et seconde parties de conversion photoélectrique.

10. Procédé de commande d'un appareil de traitement d'image, comprenant les étapes consistant à :

définir (S402) une distance d'une pluralité de distances d'objet dont chacune est associée à un objet respectif dans une image floue, en tant que distance de restauration de flou ;
restaurer (S500) une image en tant que traitement de restauration de flou à partir de l'image floue par une application d'un traitement de déconvolution à l'image floue conformément à la distance de restauration de flou ;
ordonner (S703, S704) au moyen de restauration de flou de modifier la distance de restauration de flou ;
effectuer (S405) un affichage des données d'image générées sur un dispositif d'affichage ; et
**caractérisé en ce que**
si une instruction de correction fine est émise en réponse à une opération du photographe s'il est déterminé qu'une reproduction d'une image agrandie est effectuée (S702), la distance de restauration de flou est modifiée d'une première quantité de modification (S902) et, s'il est déterminé que la reproduction d'une image agrandie n'est pas effectuée, la distance de restauration de flou est modifiée d'une seconde quantité de modification supérieure à ladite première quantité de modification (S704), l'image est restaurée à partir de l'image floue conformément à la distance de restauration de flou modifiée.

# FIG.1

EP 3 285 229 B1

# FIG.2B

TL

EP

ML

CFR

CFG

CL

PD

# FIG.2A

| R | G |
|---|---|
| G | B |

a

a

# FIG.3B

TL

EPHA

EPHB

ML

FIG.3A

CFW    CFW

OPHA    OPHB

SHA  G

CL

G  SHB

a

a

PD

# FIG.4B

## FIG.4A

FIG.5

# FIG.6

# FIG.7

**FIG.8A**

BackGround1
(out of focus)

Target3 (out of focus)

Target2
(out of focus)

Target1
(in focus)

**FIG.8B**

BackGround1
(out of focus)

Target3 (out of focus)

Target2
(in focus)

Target1
(out of focus)

**FIG.8C**

BackGround1
(out of focus)

Target3 (in focus)

Target2
(out of focus)

Target1
(out of focus)

# FIG.9

## FIG.9A

MAIN SWITCH ON — S101

↓ — S102

DETECT INITIAL STATE

↓ — S103

COMMUNICATE WITH LENS

↓ — S104

DRIVE IMAGE SENSOR

↓ — S105

DISPLAY PREVIEW IMAGE

↓ — S106

RECOGNIZE FACE

↓ — S107

ANY FACE RECOGNIZED? — NO → S109

SET MULTIPOINT AF MODE

YES ↓ — S108

SET FACE AF MODE

↓ — S110

SHOOTING PREPARATION SWITCH ON? — NO

YES ↓ — S200

OBJECT DISTANCE MAP GENERATION SUB ROUTINE

↓ — S111

DETERMINE FOCUS DETECTION POSITION

↓ — S112 NO

IN-FOCUS? — NO

S113

DRIVE FOCUS LENS

YES

| |
|---|
| FIG.9A |
| FIG.9B |

# FIG.9B

```
                              ┌── S114
              ┌──────────────────────────────┐
              │  PERFORM IN-FOCUS DISPLAY     │
              └──────────────────────────────┘
                              │        S115
                              ▼
                    ╱─────────────────╲
                   ╱   SHOOTING START   ╲      NO
                   ╲    SWITCH ON?       ╱─────────►
                    ╲─────────────────╱
                          │ YES        ┌── S300
                          ▼
              ┌──────────────────────────────┐
              │  IMAGE CAPTURING SUB ROUTINE  │
              └──────────────────────────────┘
                              │        S116
                              ▼
                    ╱─────────────────╲
                   ╱   SHOOTING START   ╲      NO
                   ╲    SWITCH OFF?      ╱─────────►
                    ╲─────────────────╱
                          │ YES     ┌── S400
                          ▼
              ┌──────────────────────────────┐
              │      CAPTURED IMAGE           │
              │  CONFIRMATION SUB ROUTINE     │
              └──────────────────────────────┘
                              │        S117
                              ▼
              NO      ╱─────────────────╲
           ◄──────── ╲   MAIN SWITCH OFF? ╱
                      ╲─────────────────╱
                          │ YES
                          ▼
                      (   END   )
```

# FIG.10

**S200**

OBJECT DISTANCE MAP
GENERATION SUB ROUTINE

**S201**

SET FOCUS DETECTION AREA

**S202**

READ FOCUS DETECTION PIXEL

**S203**

GENERATE TWO IMAGES FOR
CORRELATION CALCULATION

**S204**

PERFORM CORRELATION
CALCULATION

**S205**

DETERMINE RELIABILITY LEVEL

**S206**

CALCULATE FOCUS
DEVIATION AMOUNT

**S207**

ALL FOCUS
DETECTION AREAS
COMPLETED?

NO

YES

**S208**

GENERATE FOCUS
DEVIATION AMOUNT MAP

**S209**

CONVERT FOCUS DEVIATION
AMOUNT TO OBJECT DISTANCE

**S210**

EXTRACT OBJECT

RETURN

# FIG.11

```
                                        ╭─S300
            ╭──────────────────────────────╮
            │   IMAGE CAPTURING            │
            │   SUB ROUTINE                │
            ╰──────────────────────────────╯
                          │  ╭─S301
            ┌──────────────────────────────┐
            │   DRIVE DIAPHRAGM            │
            │   AND SHUTTER               │
            └──────────────────────────────┘
                          │  ╭─S302
            ┌──────────────────────────────┐
            │   READ HIGH-PIXEL           │
            │   STILL IMAGE               │
            └──────────────────────────────┘
                          │  ╭─S200
            ┌──────────────────────────────┐
            │   OBJECT DISTANCE MAP       │
            │   GENERATION SUB ROUTINE    │
            └──────────────────────────────┘
                          │  ╭─S303
            ┌──────────────────────────────┐
            │   INTERPOLATE               │
            │   DEFECTIVE PIXEL           │
            └──────────────────────────────┘
                          │  ╭─S304
            ┌──────────────────────────────┐
            │   PERFORM IMAGE             │
            │   PROCESSING                │
            └──────────────────────────────┘
                          │  ╭─S305
            ┌──────────────────────────────┐
            │   STORE                     │
            │   CAPTURED IMAGE            │
            └──────────────────────────────┘
                          │  ╭─S306
            ┌──────────────────────────────┐
            │ STORE IMAGING APPARATUS     │
            │ CHARACTERISTICS INFORMATION │
            └──────────────────────────────┘
                          │  ╭─S307
            ┌──────────────────────────────┐
            │ STORE PHOTOGRAPHIC LENS     │
            │ CHARACTERISTICS INFORMATION │
            └──────────────────────────────┘
                          │  ╭─S308
            ┌──────────────────────────────┐
            │   STORE IMAGE               │
            │   RELATED INFORMATION       │
            └──────────────────────────────┘
                          │
            ╭──────────────────────────────╮
            │         RETURN               │
            ╰──────────────────────────────╯
```

# FIG.12

CAPTURED IMAGE
CONFIRMATION
SUB ROUTINE — S400

ACQUIRE OBJECT
DISTANCE MAP — S401

SET BLUR RESTORATION
INFORMATION — S402

BLUR RESTORATION
SUB ROUTINE — S500

DISPLAYS IMAGE — S404

FOCUS
POSITION FINE
CORRECTION? — S405

YES → BLUR RESTORATION
DISTANCE FINE
CORRECTION
SUB ROUTINE — S700

NO — S407

STORE BLUR
RESTORED IMAGE

RETURN

# FIG.13

```
                                    ┌─S500
        ╭─────────────────────────╮
        │    BLUR RESTORATION     │
        │      SUB ROUTINE        │
        ╰─────────────────────────╯
                     │              ┌─S501
        ┌─────────────────────────┐
        │   ACQUIRE CONVERSION    │
        │  INFORMATION IN IMAGE   │
        │   CAPTURING OPERATION   │
        └─────────────────────────┘
                     │              ┌─S502
        ┌─────────────────────────┐
        │       DETERMINE         │
        │   CONVERSION METHOD     │
        └─────────────────────────┘
                     │              ┌─S503
        ┌─────────────────────────┐
        │        ACQUIRE          │
        │      IMAGE SIGNAL       │
        └─────────────────────────┘
                     │              ┌─S504
        ┌─────────────────────────┐
        │  PERFORM CONVERSION     │
        │      PROCESSING         │
        └─────────────────────────┘
                     │              ┌─S600
        ╓─────────────────────────╖
        ║     BLUR FUNCTION       ║
        ║ GENERATION SUB ROUTINE  ║
        ╙─────────────────────────╜
                     │              ┌─S505
        ┌─────────────────────────┐
        │     PERFORM BLUR        │
        │ RESTORATION PROCESSING  │
        └─────────────────────────┘
                     │
        ╭─────────────────────────╮
        │        RETURN           │
        ╰─────────────────────────╯
```

# FIG.14

```
                                              ⌐S600
        ╭─────────────────────────────╮
        │      BLUR FUNCTION           │
        │  GENERATION SUB ROUTINE      │
        ╰─────────────────────────────╯
                     │              ⌐S601
                     ▼
        ┌─────────────────────────────┐
        │  ACQUIRE IMAGING APPARATUS   │
        │  CHARACTERISTICS INFORMATION │
        └─────────────────────────────┘
                     │              ⌐S602
                     ▼
        ┌─────────────────────────────┐
        │  ACQUIRE PHOTOGRAPHIC LENS   │
        │  CHARACTERISTICS INFORMATION │
        └─────────────────────────────┘
                     │              ⌐S603
                     ▼
        ┌─────────────────────────────┐
        │    ACQUIRE BLUR PARAMETER    │
        └─────────────────────────────┘
                     │              ⌐S604
                     ▼
        ┌─────────────────────────────┐
        │     DEFINE BLUR FUNCTION     │
        └─────────────────────────────┘
                     │
                     ▼
              ╭──────────────╮
              │    RETURN     │
              ╰──────────────╯
```

# FIG.15

```
      ┌─────────────────────────┐
      │   BLUR RESTORATION      │ ~S700
      │   DISTANCE FINE         │
      │ CORRECTION SUB ROUTINE  │
      └─────────────────────────┘
                 │  ┌─S701
      ┌─────────────────────────┐
      │   ACQUIRE OBJECT        │
      │  DISTANCE INFORMATION   │
      └─────────────────────────┘
                 │       S702
              ◇ OBJECT ◇── NO ──────────────┐
              ◇ DISTANCE ≤ A? ◇             │
                 │ YES  ┌─S703       S704    │
      ┌─────────────────────┐  ┌─────────────────────┐
      │ BLUR RESTORATION    │  │ BLUR RESTORATION    │
      │ DISTANCE CHANGE     │  │ DISTANCE CHANGE     │
      │ AMOUNT = B          │  │ AMOUNT = C          │
      └─────────────────────┘  └─────────────────────┘
                 │◄──────────────────────────┘
                 │  ┌─S705
      ┌─────────────────────┐
      │   UPDATE BLUR       │
      │ RESTORATION DISTANCE │
      └─────────────────────┘
                 │
            (  RETURN  )
```

# FIG.16

# FIG.17

```
        ┌─────────────────────────┐
        │   BLUR RESTORATION      │╮  ~S700
        │   DISTANCE FINE         │
        │ CORRECTION SUB ROUTINE  │
        └─────────────────────────┘
                    │
                    ▼        ~S901
        ┌─────────────────────────┐
        │    ACQUIRE IMAGE        │
        │ ENLARGEMENT RATE FOR    │
        │  IMAGE REPRODUCTION     │
        └─────────────────────────┘
                    │
                    ▼            S902
              ◇─────────────◇
             ╱   ENLARGED     ╲
            ╱ IMAGE REPRODUCTION╲  NO
           ◇    PERFORMED        ◇──────────┐
            ╲   CURRENTLY?      ╱           │
             ╲                 ╱            │
              ◇───────────────◇             │
                    │                       │  S704
               YES  │  ~S703                ▼
        ┌──────────────────────┐   ┌──────────────────────┐
        │  BLUR RESTORATION    │   │  BLUR RESTORATION    │
        │  DISTANCE CHANGE     │   │  DISTANCE CHANGE     │
        │    AMOUNT = B        │   │    AMOUNT = C        │
        └──────────────────────┘   └──────────────────────┘
                    │                       │
                    │◄──────────────────────┘
                    │      ~S705
        ┌──────────────────────┐
        │    UPDATE BLUR       │
        │ RESTORATION DISTANCE │
        └──────────────────────┘
                    │
                    ▼
             ┌────────────┐
             │   RETURN   │
             └────────────┘
```

**EP 3 285 229 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000156823 A
- JP 2000020691 A
- US 20100073518 A
- JP 2004317699 A